Europäisches Patentamt

European Patent Office

Office européen des brevets

(19)

(11) Publication number: 0 394 808
A2

# (12) EUROPEAN PATENT APPLICATION

(21) Application number: 90107227.2

(22) Date of filing: 17.04.90

(51) Int. Cl.⁵: A01K 1/02, A01K 1/00

(30) Priority: 26.04.89 IT 3350989 U

(43) Date of publication of application:
31.10.90 Bulletin 90/44

(84) Designated Contracting States:
AT BE CH DE DK ES FR GB GR LI NL

(71) Applicant: CIMA S.R.L.
Via del Progresso, 4
Correggio (RE)(IT)

Applicant: P.C. S.p.A.
28/A, Via Caorsana
I-29100 Piacenza(IT)

(72) Inventor: Navarotto, Pierluigi
Via Pubblico Passeggio 16
Piacenza(IT)

(74) Representative: La Ciura, Salvatore
Via Francesco Sforza 5
I-20122 Milano(IT)

(54) Pig breeding unit mobile elements designed to divide each sty into a number of farrowing compartments.

(57) A pig breeding unit of the kind comprising a plurality of sties, each sty being apt to hold a number of piglets, wherein mobile movable barriers (6, 8) are provided for dividing each sty into a number of compartments (A, B, C, D), each destined to constitute a farrowing pen, said farrowing compartments (A-B-C-D) having a corner in common, the animal feed equipment (9, 10) being located in the said common corner.

FIG. 2

# PIG BREEDING UNIT WITH MOBILE ELEMENTS DESIGNED TO DIVIDE EACH STY INTO A NUMBER OF FARROWING COMPARTMENTS

This invention relates to a pig breeding unit comprising mobile elements designed to divide each sty into a number of compartments, in particular a number of compartments each destined to constitute a farrowing pen.

Due to the special arrangement of the various components, the unit in accordance with the invention is highly practical, as it can easily and quickly be adapted to the various needs arising as the animals grow.

In addition, a considerable saving in equipment costs is achieved. Modern pig breeding units are divided into a number of compartments including a farrowing compartment where the animals are housed until the end of the suckling period (approx. 20-30 days after delivery), a weaning compartment set aside for piglets up to 25-30 kg and a fattening compartment where the pigs are housed until reaching the weight of approx. 40-50 kg and over.

However, this division into compartments, due to the differing environmental, climatic and nutritional requirements of pigs at various stages of growth, involves high building costs and calls for a large amount of space and equipment.

For example, as a farrowing pen is quite expensive, it is opportune to restrict the time spent by the sow and her litter in this compartment as far as possible, in order to allow a higher turnover during the year and thus exploit the facilities for a larger number of animals.

For this reason, in the case of currently known pig units, at the end of the suckling period the sow is transferred to another section and the piglets to a separate weaning compartment.

This is done for space saving reasons, as the area of a farrowing pen is around 3.75 sq.m. on average, while a far smaller pen of around 2 sq.m. is sufficient to house the same number of piglets (8 or 9 animals).

However this system, under which the pigs are moved to a different compartment at the end of each stage of growth, presents the drawback that each move causes stress which leads to temporarily arrested growth of the animals (1 or 2 days).

While on the one hand, therefore, it is opportune for reasons of space and economy to set aside one compartment for each stage of the animals' growth, on the other it would be preferable to avoid moving them for the reason stated above.

To solve this problem, this invention presents a pig unit containing mobile elements designed to divide each sty into a number of farrowing compartments, each of which mobile elements can easily and quickly be removed and transferred to another sty for immediate re-use. Thus the same area as is used during the suckling period can also be exploited for the subsequent weaning and fattening periods, with no need to move the animals, and better exploiting the available space.

This invention will now be described in detail, by way of example but not of limitation, with particular reference to the annexed figures in which:

- fig. 1 shows the floor plan of a pig unit in accordance with the invention

- fig. 2 shows a view of a sty in a pig unit according to the invention, divided into a number of farrowing pens

- fig. 3 shows a view of the same sty after removal of the pens, for use during the weaning and fattening stages.

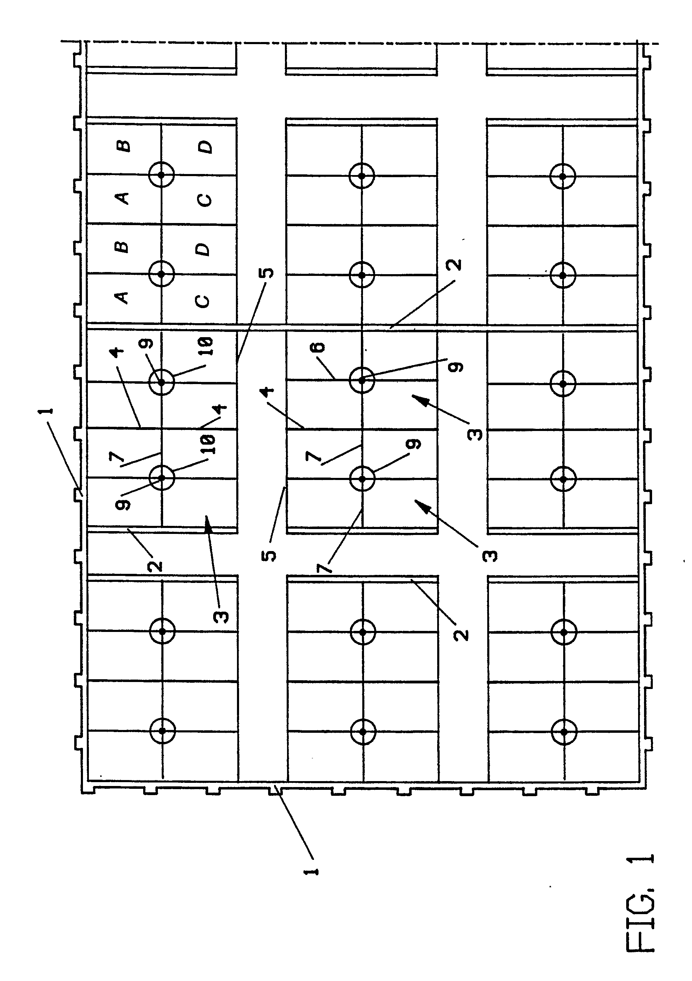

As shown in fig. 1, in a pig unit in accordance with the invention, which presents boundary walls 1 and inner partition walls 2, the available area is divided into a number of sties indicated by no. 3, bounded by walls 1 and 2 and by inner fixed barriers 4 and 5.

Each of these sties occupies an area equal to a given number (in particular four) of farrowing pens.

In the example shown in the figure, each sty has a rectangular floor plan and is divided by a pair of barriers 6 and 7, which in this specific case coincide with the centre lines of the sty, into four zones of equal area which have the central corner in common.

Each of these zones into which the sty is divided, indicated in the figure by letters A, B, C and D, is completed by movable equipment designed to convert it into a farrowing pen.

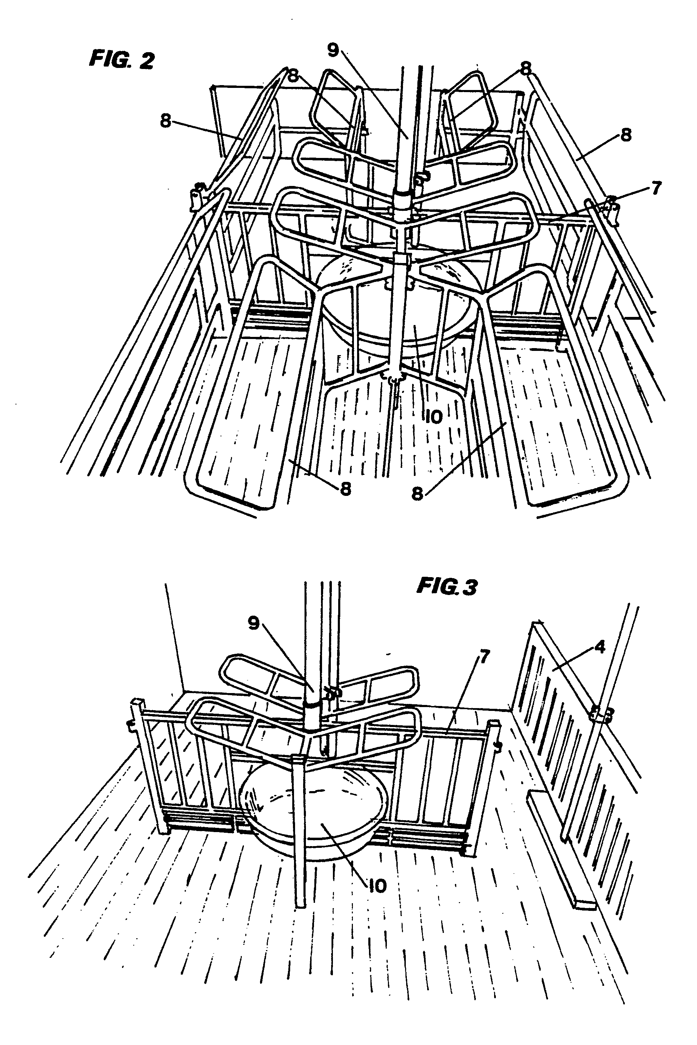

This equipment (fig. 2) consists of suitable barriers 8 secured, for example, to the same support uprights as barriers 4, 5 and 7 or directly to the said barriers, and of other equipment not illustrated as it is of known type.

In figs. 2 and 3, for a better understanding, the barriers 6 have not been illustrated.

In the central area of the sty, at the corner common to all four pens, there is an upright 9 under which stands a feed trough 10 which is preferably supplied through the said upright 9.

Barriers 6 and 8 are movable, and equipped with rapid-release couplings of known type, such as snap couplings, for fitting to their supports.

The invention is used as follows:

At the time of farrowing the necessary pens are prepared by dividing each sty with barriers 6 and 7 to obtain the various farrowing compartments, and fitting the necessary partitions 8 into each one.

Throughout the suckling period the sows feed at trough 10.

After the suckling period, when the piglets have reached the weight of approx. 6 kg, the sows are transferred to another area and each sty is adapted for use during the subsequent weaning and fattening stages.

For this purpose it is sufficient to remove barrier 8, which can immediately be re-used in other sties to make the same number of farrowing pens, while the weaned piglets can remain in their sty, feeding at trough 10 to which suitable feed will be conveyed.

If necessary barriers 5 and 6 can then be removed, and like the others can immediately be re-used in other sties.

In this way the space in each sty can be used first to make four farrowing compartments and subsequently to make weaning and fattening compartments for the piglets, with no need for them to be moved.

In the example described, each sty is rectangular and designed to be divided into four farrowing compartments, which is the most rational system from the design standpoint in view of the characteristics of the prefabricated elements used to make the pig units.

However, the same idea could, of course, be implemented in different forms, such as making each sty polygonal and dividing it into compartments with a central corner in common where the animal feed equipment is located.

The dimensions and the materials used can, of course, be varied as required.

**Claims**

1. A pig breeding unit of the kind comprising a plurality of sties, each sty being apt to hold a number of piglets, characterised in that mobile means (6, 8) are provided for dividing each sty into a number of compartments (A, B, C, D), each destined to constitute a farrowing pen.

2. A pig breeding unit according to claim 1, characterised by the fact that each sty is divided by movable barriers into four farrowing compartments (A-B-C-D) having a corner in common, the animal feed equipment (9, 10) being located in the said common corner.

3. Unit in accordance with claim 2 in which the said sties are of rectangular shape, divided into four farrowing areas (A-B-C-D) by barriers (6, 7) placed along the centre lines of the base, further movable barriers (8) being designed for fixing to the aforesaid barriers in order to make a pen for the sow inside each farrowing area, a feed trough (10) accessible from all pens being located in the common corner.

4. A pig breeding unit according to claim 3, wherein said feed through (10) is fed through an upright (9).

FIG. 1

EP 0 394 808 A2

**FIG. 2**

**FIG. 3**